Europäisches Patentamt

European Patent Office

Office européen des brevets

(19)

(11) **EP 1 450 498 A2**

(12) # EUROPEAN PATENT APPLICATION

(43) Date of publication:
**25.08.2004 Bulletin 2004/35**

(51) Int Cl.7: **H04B 7/08**, H04M 1/24

(21) Application number: **04003495.1**

(22) Date of filing: **17.02.2004**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventor: **Kitakado, Jun**<br>**2-chome, Moriguchi-shi, Osaka (JP)** |
| (30) Priority: **20.02.2003 JP 2003042978** | (74) Representative: **Glawe, Delfs, Moll & Partner**<br>**Patentanwälte**<br>**Postfach 26 01 62**<br>**80058 München (DE)** |
| (71) Applicant: **SANYO ELECTRIC Co., Ltd.**<br>**Moriguchi-shi, Osaka 570 (JP)** | |

(54) **Adaptive array radio communication apparatus and method**

(57)    In an adaptive array terminal, at least one of two antennas (ANT#1, ANT#2) is a movable type antenna. The correlation value of respective reception signals of the two antennas is displayed on a display unit (6) of the terminal. Accordingly, the user can adjust the antenna angle such that the correlation value of the reception signals of the two antennas becomes smaller. Alternatively, the control unit of the terminal can automatically adjust the antenna angle such that the antenna correlation value of the two antennas becomes lower than a predetermined value.

FIG. 1

**Description**

BACKGROUND OF THE INVENTION

Field of the Invention

The present invention relates to an adaptive array radio communication apparatus, antenna correlation display method, antenna correlation adjustment method, antenna correlation display program, and antenna correlation adjustment program. Particularly, the present invention relates to a mobile terminal apparatus incorporated with an adaptive array function using a plurality of antennas, and an antenna correlation display method, antenna correlation adjustment method, antenna correlation display program and antenna correlation adjustment program of such a mobile terminal apparatus.

Description of the Background Art

In a mobile communication system such as a PHS (Personal Handyphone System), radio communication is conventionally conducted between a mobile terminal apparatus (referred to as "terminal" hereinafter) and a radio base apparatus (referred to as "base station" hereinafter).

A conventional terminal generally includes one antenna. The radio frequency (RF) signal received at the antenna is subjected to various signal processing such as amplification and frequency conversion in an RF reception circuit.

Measurement of the reception power level (referred to as " reception level " hereinafter) of a reception signal is known as one of such signal processing of the RF reception circuit. The reception level of the reception signal at the antenna measured by the RF reception circuit is informed (notified) to the user through the display of the terminal, whereby the user can estimate the radio wave environment of the terminal.

A diversity terminal including two antennas and RF reception circuits corresponding to respective antennas has been realized. The diversity terminal carries out selective diversity reception selecting one of the two antennas having a larger reception level as the reception antenna. Such a diversity terminal is disclosed in, for example, Japanese Patent Laying-Open No. 8-97759.

This diversity terminal with two antennas is directed to select and input the reception signal of one stream from one of the two antennas to carry out signal processing for demodulation. The user is provided with the display of the reception level of reception signals of only one stream selected for demodulation.

On the part of the base station, an adaptive array base station is now adapted to practical use. The signal from a particular user is received with a plurality of antennas. By subjecting the received signals of a plurality of streams to the well known adaptive array processing, the reception signal from that particular user is separated and extracted.

As used herein, adaptive array processing refers to the well known process of extracting (synthesizing) properly the signals from a particular terminal by estimating a weight vector composed of reception coefficients (weight) for respective ones of a plurality of antennas of the base station for adaptive control, based on reception signals from the terminal. Since adaptive array processing is well known, detailed description thereof will not be provided herein.

With respect to terminals, an adaptive array terminal incorporating such an adaptive array function is now being developed. This type of adaptive array terminal includes a plurality of (for example, two) antennas and a plurality of corresponding (two) RF reception circuits. The signals of a plurality of streams received by respective antennas are input to be subjected to adaptive array processing.

It is known that adaptive array processing is characterized in that the reception characteristic is improved as a correlation (value) of the reception signals between the plurality of antennas becomes smaller. This correlation (value) is termed "antenna correlation (value)" hereinafter.

In order to separate and extract a desired signal from reception signals of two, for example, antennas by the well-known adaptive array operation, different signals must be received (low correlation value) through two antennas. For example, if the correlation value between the antennas is high such as in the case where the same signal is received through two antennas (when identical, correlation value is 1), it will become difficult to separate and extract a desired signal from the reception signals by adaptive array processing.

In general, the antenna correlation value varies depending on factors such as the distance between the plurality of antennas, the plane of polarization, and the like. For example, it is known that the signal received at each antenna is subject to fading at the propagation path. The antenna correlation value is apt to become lower since the influence of fading differs for each antenna as the plurality of antennas are distant from one another. Similarly, the antenna correlation value is apt to become lower as the plane of polarization for each antenna is different.

It is therefore desirable to allow adjustment of the antenna correlation value of the reception signals between a plurality of antennas by some method for the purpose of improving the reception performance of an adaptive array terminal.

To this end, there is realized a conventional terminal having two antennas, such as the above-described diversity terminal. One of the antennas is a fixed antenna stored in the terminal whereas the other antenna is a movable antenna, attached outside the terminal. By tilting the movable antenna forward and backward, the angle can be adjusted.

However, with respect to the display of a reception signal for the terminal user, the reception level of reception signals of only one stream input to the terminal could be displayed, no matter how many antennas the terminal incorporated. The antenna correlation value was not calculated or displayed.

Therefore, the user could not identify the antenna correlation value between a plurality of antennas with the conventional terminal having a plurality of (two) antennas even if a movable antenna was employed and the antenna angle could be adjusted.

Similarly with an adaptive array terminal including a plurality of antennas, the user could not identify the antenna correlation value between the antennas. Accordingly, the user could not adjust the angle of the antenna to obtain a lower antenna correlation value even if the antenna is of the movable type.

Furthermore, the angle adjustment of a movable antenna carried out manually by a user was not sufficient from the standpoint of accuracy in the conventional terminal with a plurality of antennas employing a movable antenna.

SUMMARY OF THE INVENTION

In view of the foregoing, an object of the present invention is to provide, in an adaptive array radio communication apparatus with a plurality of antennas, an adaptive array radio communication apparatus, an antenna correlation display method, and an antenna correlation display program that allows a user to readily adjust an antenna correlation value.

Another object of the present invention is to provide, in an adaptive array radio communication apparatus with a plurality of antennas, an adaptive array radio communication apparatus, an antenna correlation adjustment method, and an antenna correlation adjustment program that allows automatic adjustment of an antenna correlation value in high accuracy.

According to an aspect of the present invention, an adaptive array radio communication apparatus with a plurality of antennas includes an estimation unit, a display unit, and an antenna correlation adjustment unit. The estimation unit estimates a correlation value between signals of a plurality of streams received at respective plurality of antennas. The display unit displays the estimated correlation value between signals of the plurality of streams. The antenna correlation adjustment unit causes the correlation value between signals of the plurality of streams to be altered manually by a user.

Preferably, the display unit displays the correlation value between signals of the plurality of streams.

Preferably, the display unit displays a magnitude level of the correlation value between the signals of the plurality of streams.

Preferably, the display unit can selectively display the correlation value between the signals of the plurality of streams and a magnitude level of the correlation value as a display content. The adaptive array radio communication apparatus further includes a display content designation unit determining the display content by the display unit in accordance with designation by a user in advance.

Preferably, the display unit can selectively display the correlation value between the signals of the plurality of streams and a magnitude level of the correlation value as a display content. The adaptive array radio communication apparatus further includes a display content switch unit sequentially switching the display content by the display unit periodically.

Preferably, the adaptive array radio communication apparatus further includes an actuation unit actuating automatically the estimation unit and display unit.

Preferably, the adaptive array radio communication apparatus further includes an actuation unit actuating the estimation unit and the display unit in accordance with designation by a user.

According to another aspect of the present invention, an adaptive array radio communication apparatus with a plurality of antennas includes an estimation unit, and an antenna correlation adjustment unit. The estimation unit estimates a correlation value between signals of a plurality of streams received at respective plurality of antennas. The antenna correlation adjustment unit alters the correlation value between signals of the plurality of streams such that the estimated correlation value becomes smaller.

Preferably, the antenna correlation adjustment unit includes an antenna driving unit modifying an angle between a plurality of antennas, and a control unit controlling the antenna driving unit such that an angle between the plurality of antennas is modified to cause the correlation value to become lower than a predetermined threshold value.

Preferably, the adaptive array radio communication apparatus further includes an actuation unit actuating automatically the estimation unit and antenna correlation adjustment unit.

Preferably, the adaptive array radio communication apparatus further includes an actuation unit actuating the estimation unit and the antenna correlation adjustment unit in accordance with designation by a user.

According to a further aspect of the present invention, an antenna correlation display method of an adaptive array radio communication apparatus with a plurality of antennas includes the steps of estimating a correlation value between signals of a plurality of streams received at respective plurality of antennas, and displaying the estimated correlation value between the signals of the plurality of streams.

Preferably, the display step displays the correlation value between the signals of the plurality of streams.

Preferably, the display step displays a magnitude level of the correlation value between the signals of the plurality of streams.

Preferably, the display step can selectively display the correlation value between the signals of the plurality of streams and a magnitude level of the correlation value as a display content. The antenna correlation display method further includes the step of determining the display content by the display step in accordance with designation by a user in advance.

Preferably, the display step can selectively display the correlation value between the signals of the plurality of streams, and a magnitude level of the correlation value as a display content. The antenna correlation display method further includes the step of sequentially switching the display content by the display step periodically.

Preferably, the antenna correlation display method further includes the step of actuating automatically the estimation step and display step.

Preferably, the antenna correlation display method further includes the step of actuating the estimation step and display step in accordance with designation by a user.

According to still another aspect of the present invention, an antenna correlation adjustment method of an adaptive array radio communication apparatus with a plurality of antennas includes the steps of estimating a correlation value between signals of a plurality of streams received at respective plurality of antennas, and altering the correlation value between the signals of the plurality of streams such that the estimated correlation value becomes smaller.

Preferably, the correlation value altering step includes the step of modifying an angle between the plurality of antennas such that the correlation value becomes lower than a predetermined threshold value.

Preferably, the antenna correlation adjustment method further includes the step of actuating automatically the estimation step and the correlation value altering step.

Preferably, the antenna correlation adjustment method further includes the step of actuating the estimation step and the correlation value altering step in accordance with designation by a user.

According to a still further aspect of the present invention, an antenna correlation display program of an adaptive array radio communication apparatus with a plurality of antennas causes a computer to execute the steps of estimating a correlation value between signals of a plurality of streams received at respective plurality of antennas, and displaying the estimated correlation value between the signals of the plurality of streams.

Preferably, the display step displays the correlation value between the signals of the plurality of streams.

Preferably, the display step displays a magnitude level of the correlation value between the signals of the plurality of streams.

Preferably, the display step can selectively display the correlation value between the signals of a plurality of streams and a magnitude level of the correlation value as a display content. The antenna correlation display program further causes the computer to execute the step of determining the display content by the display step in accordance with designation by a user in advance.

Preferably, the display step can selectively display the correlation value between the signals of the plurality of streams and a magnitude level of the correlation value as a display content. The antenna correlation display program further causes the computer to execute the step of sequentially switching the display content by the display step periodically.

Preferably, the antenna correlation display program further causes the computer to execute the step of actuating automatically the estimation step and the display step.

Preferably, the antenna correlation display program further causes the computer to execute the step of actuating the estimation step and the display step in accordance with designation by a user.

According to yet a further aspect of the present invention, an antenna correlation adjustment program of an adaptive array radio communication apparatus with a plurality of antennas causes a computer to execute the steps of estimating a correlation value between signals of a plurality of streams received at respective plurality of antennas, and altering the correlation value between the signals of the plurality of streams such that the estimated correlation value becomes smaller.

Preferably, the correlation value altering step includes the step of modifying an angle between the plurality of antennas such that the correlation value becomes lower than a predetermined threshold value.

Preferably, the antenna correlation adjustment program further causes the computer to execute the step of actuating automatically the estimation step and the correlation value altering step.

Preferably, the antenna correlation adjustment program causes the computer to further execute the step of actuating the estimation step and the correlation value altering step.

In accordance with the adaptive array radio communication apparatus having a plurality of antennas of the present invention, the correlation value between signals of a plurality of streams received at respective plurality of antennas can be displayed to the user. The user can adjust the reception level such that the correlation value between antennas becomes smaller by adjusting the angle of a movable antenna, for example, while viewing the display. Accordingly, the reception characteristic of the adaptive array processing in an adaptive array radio communication apparatus can be further improved.

Additionally, in accordance with the adaptive

**EP 1 450 498 A2**

array radio communication apparatus having a plurality of antennas of the present invention, the antenna correlation value can be adjusted more accurately by calculating a correlation value between signals of a plurality of streams received at respective plurality of antennas to automatically adjust the angle of a movable antenna, for example, such that the correlation value becomes smaller. Accordingly, the reception characteristic of adaptive array processing in an adaptive array radio communication apparatus can be further improved.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a functional block diagram of a configuration of an adaptive array terminal in accordance with a first embodiment of the present invention.
Figs. 2A-2C are schematic diagrams of examples of an antenna correlation value display method of the adaptive array terminal in accordance with the first embodiment of the present invention.
Fig. 3 is a flow chart of the operation of the adaptive array terminal in accordance with the first embodiment of the present invention.
Fig. 4 is a functional block diagram of a configuration of an adaptive array terminal in accordance with a second embodiment of the present invention.
Fig. 5 is a flow chart of an operation of the adaptive array terminal in accordance with the second embodiment of the present invention.

DESCRIPTION OF THE PREFERRED EMBODIMENTS

Embodiments of the present invention will be described hereinafter with reference to the drawings. In the drawings, the same or corresponding components have the same reference character allotted, and description thereof will not be repeated.

First Embodiment

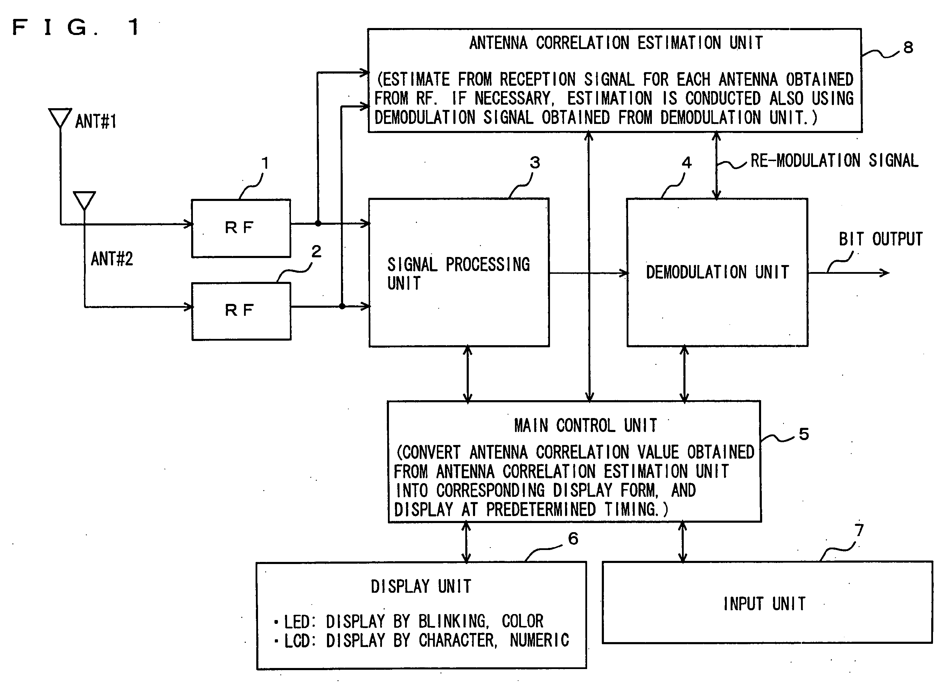

Fig. 1 is a functional block diagram of a configuration of an adaptive array terminal in accordance with the first embodiment of the present invention.
A downstream radio signal from a base station not shown is received at respective antennas ANT#1 and ANT#2, and then applied to corresponding RF reception circuits 1 and 2 as RF signals of radio frequency.
In each of RF reception circuits 1 and 2, the received RF signal is subjected to a predetermined analog process such as amplification, frequency conversion, and the like, and then applied to a signal processing unit 3 and an antenna correlation estimation unit 8. Signal processing unit 3 applies adaptive array processing to the signals received from RF reception circuits 1 and 2 under control of a main control unit 5 to separate and extract a desired reception signal.
Specifically, the well known adaptive array processing of extracting (synthesizing) a desired signal properly from a base station is executed at signal processing unit 3 by estimating a weight vector composed of weights for respective ones of the two antennas ANT#1 and ANT#2 of the terminal, based on the reception signal from the base station, for adaptive control.
Signal processing unit 3 of Fig. 1 includes a weight control unit, not shown, to estimate such a weight vector for each symbol of a reception signal. The weight control unit executes processing to converge the weight vector so as to reduce a square of an error between the sum of complex multiplication of the reception signal vector by an estimated weight vector and a known reference signal, that is, the adaptive array processing to converge the reception directivity from the base station.
In adaptive array processing, such weight vector convergence can be carried out adaptively in accordance with time and variation in the propagation path characteristic of the signal wave, and remove the interference component and noise from the reception signal to extract a reception signal from the base station.
In the weight control unit, sequential estimation algorithm such as RLS (Recursive Least Square) algorithm and LMS (Least Mean Square) algorithm is employed as the weight estimation algorithm.
Such RLS and LMS algorithms are well established in the field of adaptive array processing, and described in detail in, for example, "Adaptive Signal Processing by Array Antenna" by Nobuyoshi Kikuma, (Kagaku Gijutsu Shuppan), pp. 35-49, Chapter 3: MMSE Adaptive Array issued November 25, 1998. Therefore, detailed description of adaptive array processing will not be provided here.
A demodulation unit 4 of Fig. 1 applies, under control of main control unit 5, a demodulation process on the reception signal separated and extracted by the adaptive array processing at signal processing unit 3. Demodulated bit output is provided from demodulation unit 4. Demodulation unit 4 also provides to an antenna correlation estimation unit 8 a signal that is a remodulated version of the bit output that was temporarily demodulated as set forth above, for the purpose of calculation of an antenna correlation value that will be described afterwards.
Main control unit 5 also controls the operation of a display unit 6 as will be described afterwards, in addition to the aforementioned signal processing unit 3 and demodulation unit 4, based on a user's designation through an input unit 7.
Antenna correlation estimation unit 8 estimates, under control of main control unit 5, the antenna correlation value between the signal streams received at antennas ANT#1 and ANT#2 based on the reception signals from RF reception circuits 1 and 2, and the remodulation signal, as necessary, from demodulation unit 4. The result is provided to main control unit 5.

Specific examples of the antenna correlation value estimation method at antenna correlation estimation unit 8 will be described hereinafter based on three typical methods of antenna correlation value estimation. However, the antenna correlation estimation method applied to the present invention is not limited to those described hereinafter.

(1) First Antenna Correlation Value Estimation Method

This method is directed to estimate an antenna correlation value from a plurality of symbol data (for example, 120 symbols) of IQ signals received during the period of one slot.

Specifically, an antenna correlation value $\alpha$ is obtained by the following equation, where $X_1$ and $X_2$ are the reception signals of antennas ANT#1 and ANT#2, respectively.

$$\alpha = \left| X_1 X_2^H \right| / |X_1||X_2| \qquad (1)$$

Here, $A^H$ is the complex conjugate transposition matrix of matrix A.

$X_j$ (j = 1, 2) is a vector represented by $(X_{ji}, X_{j2}, X_{j3}, ..., X_{jn})$, with a plurality (n) of symbol data of the IQ signals received at antenna ANT#j as the elements.

(2) Second Antenna Correlation Value Estimation Method

This method is directed to estimate an antenna correlation value from a plurality of reception response vectors estimated within one slot.

Before describing the antenna correlation value estimation method, a typical calculation method of reception response vector will be described hereinafter based on an example where a reception response vector h of a desired signal is estimated from a reception signal X.

It is assumed that reception signal X is represented by the following equation.

$$X = h^* D + n \qquad (2)$$

where D is the remodulation signal of a desired signal (corresponding to the remodulation signal applied from demodulation unit 4 to antenna correlation estimation unit 8 of Fig. 1), and n is the noise.

The right-hand side and left-hand side of the above equation (2) are multiplied by a remodulation signal D of the desired signal, and the ensemble average (time average) is taken, represented by the following equation.

$$E[X^*D^*] = h^* E[D^*D^*] + E[n^*D^*] \qquad (3)$$

where D* is a further transposition of the complex conjugate of each element of vector D. Since E [D*D*]=1, E [n*D*] = 0, the reception response vector is represented by the following equation.

$$E[X^*D^*] = h \qquad (4)$$

Based on reception response vector h calculated as set forth above, the antenna correlation value can be obtained as follows.

Let $h_1$ and $h_2$ be the reception response vectors of antennas ANT#1 and ANT#2, respectively, then antenna correlation value $\alpha$ is obtained by the following equation.

$$\alpha = \left| h_1 h_2^H \right| / |h_1||h_2| \qquad (5)$$

Here, $h_j$ (j = 1, 2) is a vector represented by $(h_{j1}, h_{j2}, h_{j3}, ..., h_{jn})$, with a plurality (n) of reception response vectors estimated at antenna ANT#j as the elements.

(3) Third Antenna Correlation Value Estimation Method

This method is directed to estimate an antenna correlation value from a plurality of reception response vectors estimated at a predetermined position (for example, the leading edge) of each slot over a plurality of slots.

The method of calculating a reception response vector is as set forth above.

Let $h_1$ and $h_2$ be the reception response vectors of antennas ANT#1 and ANT#2, respectively, then antenna correlation value $\alpha$ is obtained by the following equation.

$$\alpha = \left| h_1 h_2^H \right| / |h_1| \, |h_2| \qquad (6)$$

Here, $h_j$ (j = 1, 2) is the vector represented by $(h_{j1}, h_{j2}, h_{j3}, ..., h_{jn})$, with a plurality of reception response vectors (over n slots) estimated at antenna ANT#j.

Returning to Fig. 1, main control unit 5 converts the antenna correlation value obtained from antenna correlation estimation unit 8 into various display forms that will be described afterwards for display on display unit 6 at a predetermined timing.

Display unit 6 can be formed of various types of display devices such as a light emitting diode (LED) or a liquid display device (LCD). In the case where display unit 6 is formed of LED, the antenna correlation value is displayed based on the blinking manner, light emitting color, and the like thereof. In the case where display unit 6 is formed of LCD, the antenna correlation value is displayed based on the text, numerics and the like represented on the display screen.

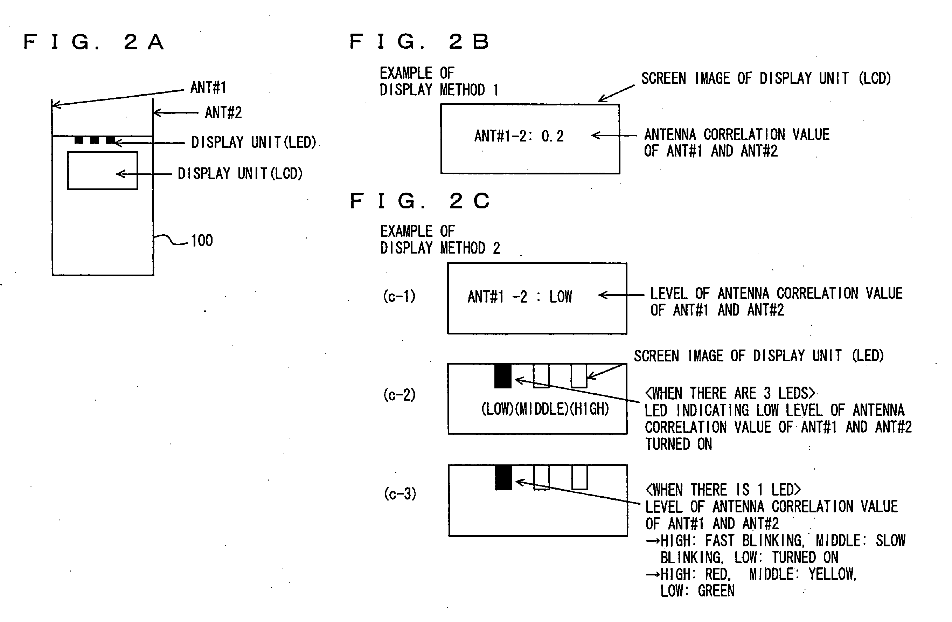

Figs. 2A -2C are schematic diagrams of examples of the antenna correlation value display method of the adaptive array terminal in accordance with the first embodiment of the present invention.

Fig. 2A schematically shows the front view of the appearance of an adaptive array terminal 100. Referring to Fig. 2A, adaptive array terminal 100 includes two antennas ANT#1 and ANT#2. At least one of the two antennas is a movable antenna that can have the angle with respect to the other antenna adjusted by being tilted frontward or backward.

It is assumed that adaptive array terminal 100 has a display unit corresponding to display unit 6 of Fig. 1, implemented by LED and/or LCD. The antenna correlation value display manner through such a display unit will be described hereinafter.

Fig. 2B represents an example of a display method 1 in accordance with the first embodiment of the present invention. In display method 1, the antenna correlation value of two antennas ANT#1 and ANT#2 is calculated by antenna correlation estimation unit 8, and displayed as a numeric value on the display unit formed of LCD of adaptive array terminal 100, under control of main control unit 5.

In the example of Fig. 2B, the numeric value of 0.2 is displayed as the correlation value between the reception signals of antenna ANT#1 and the reception signal of antenna ANT#2, as an image on the display unit formed of LCD.

The user adjusts the angle of the movable antenna manually such that the correlation value of the reception signals of the two antennas becomes smaller while viewing the display.

Fig. 2C represents an example of display method 2 in accordance with the first embodiment of the present invention. In display method 2, the antenna correlation value of two antennas ANT#1 and ANT#2 is calculated by antenna correlation estimation unit 8, and displayed as a magnitude level of the correlation value on the display unit formed of LCD or LED of adaptive array terminal 100 under control of main control unit 5.

Such a magnitude level of the correlation value can be determined at main control unit 5 by classifying the magnitude of the correlation value as one of the three stages of high, middle, and low in comparison with predetermined threshold values.

The example of (c - 1) of Fig. 2C shows a display of "low" corresponding to the magnitude level of the correlation value between the reception signal of antenna ANT#1 and the reception signal of antenna ANT#2, as an image of a display unit formed of LCD.

In the example of (c - 2) of Fig. 2C, the LED of "low" corresponding to the magnitude level of the correlation value between the reception signal of antenna ANT#1 and the reception signal of antenna ANT#2 is turned on, as an image of a display unit formed of three LEDs.

In the example of (c - 3) of Fig. 2C, the LED is turned on in a blinking manner with the flashing rate or color corresponding to "low" with respect to the magnitude level of the correlation value between the reception signal of antenna ANT#1 and the reception signal of antenna ANT#2, as an image of a display unit formed of one LCD.

For example, the LED is turned on and off in a blinking manner at high speed and at low speed when the magnitude level of the correlation value is "high" and "middle", respectively, and turned on constantly when the magnitude level of the correlation value is "low".

Additionally, the LED is turned on in red, yellow, and green when the magnitude level of the correlation value is "high", "middle", and "low", respectively.

The user manually adjusts the angle of the movable antenna such that the magnitude level of the correlation value between the reception signals of the two antennas becomes smaller while viewing the display.

The selection of either display method 1 or 2 may be implemented so as to be designated in advance through manipulation of input unit 7 by a user, or implemented so as to be switched sequentially between display methods 1 and 2 periodically.

Furthermore, the determination and display process of the correlation value can be implemented so as to be actuated automatically by the adaptive array terminal or in the event of an operation by the user through input unit 7.

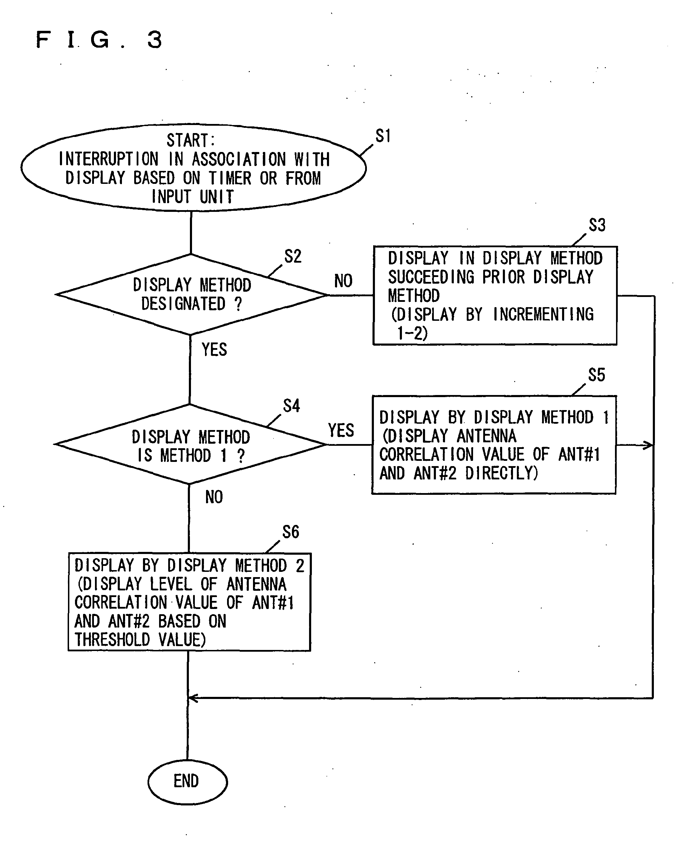

In practice, the configuration of the functional block diagram of the adaptive array terminal of Fig. 1 is executed by software in accordance with the flow chart of Fig. 3 through a digital signal processor (DSP) not shown. The DSP reads out a program including respective steps of the flow chart of Fig. 3 from a memory not shown and executes the program. This program can be installed from an external source.

A correlation value display operation of the adaptive array terminal in accordance with the first embodiment will be described hereinafter with reference to Fig. 3.

At step S1, the operation associated with display is actuated automatically by interruption through a timer, or actuated through manipulation of input unit 7 by the user.

At step S2, determination is made whether a display method (for example, display method 1 or 2 exemplified in Figs. 2B and 2C) has been designated in advance by the user.

If not designated, control proceeds to step S3 to display in a manner succeeding the prior display method (i.e., display methods 1 and 2 are sequentially incremented for display at step S3).

When determination is made that the display method has been designated in advance at step S2, control proceeds to step S4 where determination is made whether the designated display method is display method 1 of Fig. 2B.

When determination is made that the designated display method is display method 1 at step S4, control proceeds to step S5 where the correlation value of the reception signals of antennas ANT#1 and ANT#2 is directly displayed in accordance with display method 1, as shown in Fig. 2B.

When determination is made that the designated display method is not display method 1 at step S4, control proceeds to step S6 where the magnitude level of the correlation value of respective reception signals of antennas ANT#1 and ANT#2 is displayed in accordance with display method 2, as shown in Fig. 2C.

By repeating the above-described processes, a display is provided in the relevant display method designated by the user. If the display method is not designated, the display in accordance with display methods 1 and 2 will be repeated sequentially.

In accordance with the adaptive array terminal having a plurality of antennas of the first embodiment, the correlation value between signals of a plurality of streams received at respective plurality of antennas can be displayed (notified) to the user in various manners. The user can adjust the angle of the movable antenna, i.e., the angle between the antennas, while viewing the display to adjust the correlation value such that the correlation value of the reception signals between the antennas becomes smaller. Accordingly, the reception characteristic of adaptive array processing in an adaptive array terminal can be improved.

Second Embodiment

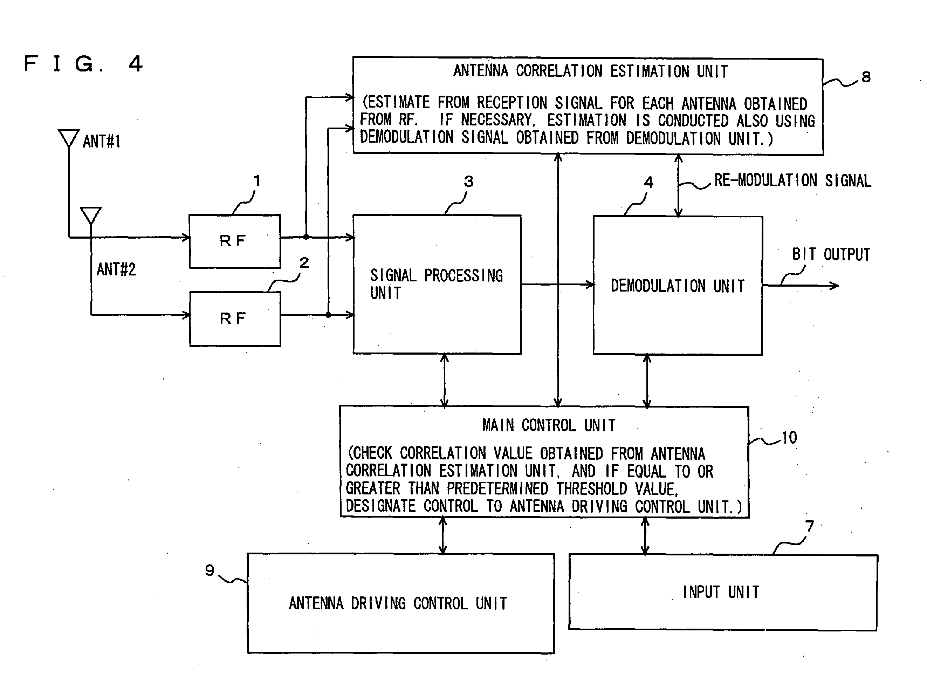

Fig. 4 is a functional block diagram of a configuration of an adaptive array terminal in accordance with a second embodiment of the present invention. The functional block diagram of Fig. 4 is similar to the functional block diagram of the first embodiment shown in Fig. 1 except for the issues set forth in the following. Therefore, description of common elements will not be repeated.

Specifically, the functional block diagram of Fig. 4 has an antenna driving control unit 9 provided instead of (or in addition to) display unit 6 of Fig. 1. Also, there is provided a main control unit 10 controlling antenna driving control unit 9 instead of main control unit 5 controlling display unit 6 of Fig. 1.

Antenna driving control unit 9 automatically controls, in accordance with the control signal from main control unit 10, the angle adjustment of the movable antenna to allow modification of the angle by tilting, backward or forward, for example, one of the two antennas of the adaptive array.

Main control unit 10 controls antenna driving control unit 9 such that the angle between the two antennas is adjusted to cause the antenna correlation value to become lower than the threshold value upon determination that the antenna correlation value obtained from antenna correlation estimation unit 8 is equal to or higher than the predetermined threshold value.

Such antenna correlation value determination and antenna driving control process may be implemented so as to be actuated automatically by the adaptive array terminal, or actuated in the event of the user operating input unit 7.

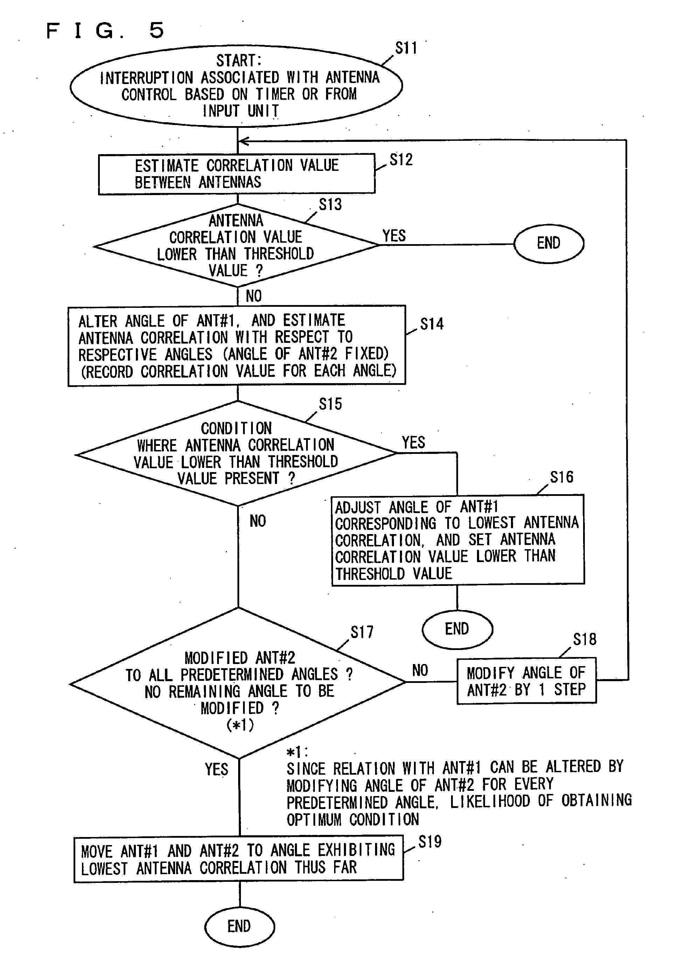

In practice, the configuration of the functional block diagram of the adaptive array terminal of Fig. 4 is executed by software in accordance with the flow chart of Fig. 4 by a digital signal processor (DSP) not shown. The DSP reads out a program including the steps in the flow chart of Fig. 5 from a memory not shown to execute the program. This program can be installed from an external source.

The correlation value adjustment operation of the adaptive array terminal in accordance with the second embodiment of the present invention will be described hereinafter with reference to Fig. 5. In the following, it is assumed that the two antennas of the adaptive array terminal are both movable antennas allowing angle adjustment.

At step S 11, the operation associated with antenna control is actuated automatically through interruption by a timer, or by an operation through input unit 7 by the user.

At step S 12, the correlation value of reception signals of antennas ANT#1 and ANT#2 is calculated.

At step S 13, determination is made whether the calculated antenna correlation value is lower than a predetermined threshold value. The process ends when determination is made that the correlation value is lower than the threshold value.

When determination is made that the correlation value is not lower than the predetermined threshold value, control proceeds to step S 14 where the antenna correlation values corresponding to respective angles are obtained while modifying the angle of antenna ANT#1 (the angle of ANT#2 is fixed). The obtained antenna correlation values are recorded in correspondence with respective angles.

At step S 15, determination is made whether there is an antenna correlation value among the stored antenna correlation values that is lower than the threshold value. When determination is made that there is an antenna correlation value lower than the threshold value, control proceeds to step S16 to adjust the angle of antenna ANT#1 to the angle where the antenna correlation value is lowest. Then, the process ends.

When determination is made that there is no antenna correlation value lower than the threshold value at step S 15, control proceeds to step S17 where determination is made whether antenna ANT#2 has been modified to all the predetermined angles. When determination is made that there is yet an angle to be modified, control proceeds to step S 18 to modify the angle of antenna ANT#2 by one predetermined step.

The above-described steps S 12 to 17 are repeated with the angle of antenna ANT#2 fixed at a relevant angle. When determination is made that antenna ANT#2 has been altered to all the predetermined angles at step S 17, control proceeds to step S 19 to move the angles of antennas ANT# 1 and ANT#2 to the combination of the angles of antennas ANT#1 and ANT#2 that has exhibited the lowest antenna correlation value. Then, the process ends.

Thus, the correlation value of the two antennas can be adjusted to the minimum value.

In accordance with an adaptive array terminal having a plurality of antennas of the second embodiment of the present invention, the correlation value between signals of a plurality of streams received at respective plurality of antennas is calculated and the angle of the movable antenna, i.e. the angle between the antennas, is adjusted automatically such that the correlation value become smaller. Therefore, the antenna correlation value can be adjusted more accurately. Thus, the reception characteristic of adaptive array processing in an adaptive array radio communication apparatus can be further improved.

In the first and second embodiments set forth above, the adaptive array terminal includes, but is not limited to, two antennas. The number of antennas required for adaptive array processing is arbitrary. Furthermore, not all the plurality of antennas have to be movable antennas. A mixture of a movable antenna and fixed antenna may be incorporated as long as the angle between the antennas can be adjusted.

In accordance with the adaptive array radio communication apparatus having a plurality of antennas of the present invention, the correlation value between signals of a plurality of streams received at respective plurality of antennas can be displayed to the user. The user can adjust the angle of, for example, the movable antenna while viewing the display of the correlation value to adjust the antenna correlation value to a lower value. Thus, the reception characteristic of adaptive array processing in an adaptive array radio communication apparatus can be further improved by the present invention.

In accordance with the adaptive array radio communication apparatus having a plurality of antennas of the present invention, the correlation value between signals of a plurality of streams received at respective antennas can be calculated to allow automatic adjustment of the angle of, for example, the movable antenna such that the correlation value becomes smaller. Therefore, the antenna correlation value can be adjusted more accurately. As a result, the reception characteristic of adaptive array processing in an adaptive array radio communication apparatus of the present invention can be further improved.

Although the present invention has been described and illustrated in detail, it is clearly understood that the same is by way of illustration and example only and is not to be taken by way of limitation, the spirit and scope of the present invention being limited only by the terms of the appended claims.

**Claims**

1. An adaptive array radio communication apparatus having a plurality of antennas, comprising:

   estimation means (8) for estimating a correlation value between signals of a plurality of streams received at respective said plurality of antennas,
   display means (6) for displaying said estimated correlation value between said signals of said plurality of streams, and
   antenna correlation adjustment means for causing the correlation value between said signals of said plurality of streams to be altered manually by a user.

2. The adaptive array radio communication apparatus according to claim 1, wherein said display means displays the correlation value between said signals of said plurality of streams.

3. The adaptive array radio communication apparatus according to claim 1, wherein said display means displays a magnitude level of the correlation value between said signals of said plurality of streams.

4. The adaptive array radio communication apparatus according to claim 1, wherein said display means can selectively display the correlation value between said signals of said plurality of streams and a magnitude level of said correlation value as a display content,

   said adaptive array radio communication apparatus further comprising display content designation means for determining the display content by said display means in accordance with designation by a user in advance.

5. The adaptive array radio communication apparatus according to claim 1, wherein said display means can selectively display the correlation value between said signals of said plurality of streams and a magnitude level of said correlation value as a display content,

said adaptive array radio communication apparatus further comprising display content switch means for sequentially switching the display content by said display means periodically.

6. The adaptive array radio communication apparatus according to claim 1, further comprising actuation means for actuating automatically said estimation means and said display means.

7. The adaptive array radio communication apparatus according to claim 1, further comprising actuation means for actuating said estimation means and said display means in accordance with designation by a user.

8. An adaptive array radio communication apparatus having a plurality of antennas, comprising:

estimation means (8) for estimating a correlation value between signals of a plurality of streams received at respective said plurality of antennas, and
antenna correlation adjustment means (9, 10) for altering the correlation value between said signals of said plurality of streams such that said estimated correlation value becomes smaller.

9. The adaptive array radio communication apparatus according to claim 8, wherein said antenna correlation adjustment means comprises
antenna driving means for modifying an angle between a plurality of antennas, and
control means for controlling said antenna driving means such that an angle between said plurality of antennas is modified to cause said correlation value to become lower than a predetermined threshold value.

10. The adaptive array radio communication apparatus according to claim 8, further comprising actuation means for actuating automatically said estimation means and said antenna correlation adjustment means.

11. The adaptive array radio communication apparatus according to claim 8, further comprising actuation means for actuating said estimation means and said antenna correlation adjustment means in accordance with designation by a user.

12. An antenna correlation display method of an adaptive array radio communication apparatus having a plurality of antennas, said method comprising the steps of
estimating a correlation value between signals of a plurality of streams received at respective said plurality of antennas, and
displaying said estimated correlation value between said signals of said plurality of streams.

13. The antenna correlation display method according to claim 12, wherein said display step displays the correlation value between said signals of said plurality of streams.

14. The antenna correlation display method according to claim 12, wherein said display step displays a magnitude level of the correlation value between said signals of said plurality of streams.

15. An antenna correlation adjustment method of an adaptive array radio communication apparatus having a plurality of antennas, said method comprising the steps of:

estimating a correlation value between signals of a plurality of streams received at respective said plurality of antennas, and
altering the correlation value between said signals of said plurality of streams such that said estimated correlation value becomes smaller.

16. The antenna correlation adjustment method according to claim 15, wherein said correlation value altering step further includes the step of modifying an angle between said plurality of antennas such that said correlation value becomes lower than a predetermined value.

17. An antenna correlation display program of an adaptive array radio communication apparatus having a plurality of antennas, causing a computer to execute the steps of:

estimating a correlation value between signals of a plurality of streams received at respective said plurality of antennas, and
displaying said estimated correlation value between said signals of said plurality of streams.

18. The antenna correlation display program according to claim 17, wherein said display step displays the correlation value between said signals of said plurality of streams.

19. The antenna correlation display program according to claim 17, wherein said display step displays a magnitude level of the correlation value between said signals of said plurality of streams.

20. An antenna correlation adjustment program of an adaptive array radio communication apparatus having a plurality of antennas, said program causing a computer to execute the steps of:

estimating a correlation value between signals of a plurality of streams received at respective said plurality of antennas, and
altering the correlation value between said signals of said plurality of streams such that said estimated correlation value becomes smaller.

# FIG. 1

**ANTENNA CORRELATION ESTIMATION UNIT** — 8

(ESTIMATE FROM RECEPTION SIGNAL FOR EACH ANTENNA OBTAINED FROM RF. IF NECESSARY, ESTIMATION IS CONDUCTED ALSO USING DEMODULATION SIGNAL OBTAINED FROM DEMODULATION UNIT.)

ANT#1

ANT#2

RF — 1

RF — 2

RE-MODULATION SIGNAL

SIGNAL PROCESSING UNIT — 3

DEMODULATION UNIT — 4

BIT OUTPUT

**MAIN CONTROL UNIT** — 5

(CONVERT ANTENNA CORRELATION VALUE OBTAINED FROM ANTENNA CORRELATION ESTIMATION UNIT INTO CORRESPONDING DISPLAY FORM, AND DISPLAY AT PREDETERMINED TIMING.)

**DISPLAY UNIT** — 6

· LED: DISPLAY BY BLINKING, COLOR
· LCD: DISPLAY BY CHARACTER, NUMERIC

**INPUT UNIT** — 7

# FIG. 2A

ANT#1
ANT#2
DISPLAY UNIT(LED)
DISPLAY UNIT(LCD)

100

# FIG. 2B

EXAMPLE OF
DISPLAY METHOD 1

SCREEN IMAGE OF DISPLAY UNIT (LCD)

ANT#1-2: 0.2 — ANTENNA CORRELATION VALUE
OF ANT#1 AND ANT#2

# FIG. 2C

EXAMPLE OF
DISPLAY METHOD 2

(c-1)　ANT#1 -2 : LOW — LEVEL OF ANTENNA CORRELATION VALUE
OF ANT#1 AND ANT#2

SCREEN IMAGE OF DISPLAY UNIT (LED)

(c-2)

(LOW)(MIDDLE)(HIGH)

〈WHEN THERE ARE 3 LEDS〉
LED INDICATING LOW LEVEL OF ANTENNA
CORRELATION VALUE OF ANT#1 AND ANT#2
TURNED ON

(c-3)

〈WHEN THERE IS 1 LED〉
LEVEL OF ANTENNA CORRELATION VALUE
OF ANT#1 AND ANT#2
→HIGH: FAST BLINKING, MIDDLE: SLOW
　BLINKING, LOW: TURNED ON
→HIGH: RED, MIDDLE: YELLOW,
　LOW: GREEN

EP 1 450 498 A2

# F I G . 3

```
        ┌─────────────────────────────────────┐  S1
       (  START:                                )
       ( INTERRUPTION IN ASSOCIATION WITH       )
       ( DISPLAY BASED ON TIMER OR FROM         )
       (  INPUT UNIT                            )
        └─────────────────────────────────────┘
                       │
                       │                              ┌──────────────────────────────┐ S3
                       │                       NO     │ DISPLAY IN DISPLAY METHOD     │
              ◇ DISPLAY METHOD ◇ ──────────────────── │ SUCCEEDING PRIOR DISPLAY      │
              ◇ DESIGNATED ?   ◇  S2                  │ METHOD                        │
                       │                              │  (DISPLAY BY INCREMENTING     │
                      YES                             │   1-2)                        │
                       │                              └──────────────────────────────┘
                       │                                             │
                       │                              ┌──────────────────────────────┐ S5
                       │                       YES    │ DISPLAY BY DISPLAY METHOD 1   │
              ◇ DISPLAY METHOD ◇ ──────────────────── │ (DISPLAY ANTENNA              │
              ◇ IS METHOD 1 ?  ◇  S4                  │ CORRELATION VALUE OF ANT#1    │
                       │                              │ AND ANT#2 DIRECTLY)           │
                      NO                              └──────────────────────────────┘
                       │
        ┌──────────────────────────────┐ S6
        │ DISPLAY BY DISPLAY METHOD 2   │
        │ (DISPLAY LEVEL OF ANTENNA     │
        │ CORRELATION VALUE OF ANT#1    │
        │ AND ANT#2 BASED ON            │
        │ THRESHOLD VALUE)              │
        └──────────────────────────────┘
                       │
                      ( END )
```

F I G. 4

ANTENNA CORRELATION ESTIMATION UNIT ~8

(ESTIMATE FROM RECEPTION SIGNAL FOR EACH ANTENNA OBTAINED
FROM RF.  IF NECESSARY, ESTIMATION IS CONDUCTED ALSO USING
DEMODULATION SIGNAL OBTAINED FROM DEMODULATION UNIT.)

ANT#1

1

RF

ANT#2

2

RF

3

SIGNAL PROCESSING
UNIT

RE-MODULATION SIGNAL

4

DEMODULATION UNIT

BIT OUTPUT

MAIN CONTROL UNIT ~10

(CHECK CORRELATION VALUE OBTAINED FROM ANTENNA
CORRELATION ESTIMATION UNIT, AND IF EQUAL TO OR
GREATER THAN PREDETERMINED THRESHOLD VALUE,
DESIGNATE CONTROL TO ANTENNA DRIVING CONTROL UNIT.)

9

ANTENNA DRIVING CONTROL UNIT

7

INPUT UNIT

EP 1 450 498 A2

EP 1 450 498 A2

## F I G . 5

START:
INTERRUPTION ASSOCIATED WITH ANTENNA
CONTROL BASED ON TIMER OR FROM
INPUT UNIT — S11

ESTIMATE CORRELATION VALUE
BETWEEN ANTENNAS — S12

ANTENNA
CORRELATION VALUE
LOWER THAN THRESHOLD
VALUE ? — S13

YES → END

NO

ALTER ANGLE OF ANT#1, AND ESTIMATE
ANTENNA CORRELATION WITH RESPECT TO
RESPECTIVE ANGLES (ANGLE OF ANT#2 FIXED)
(RECORD CORRELATION VALUE FOR EACH ANGLE) — S14

CONDITION
WHERE ANTENNA CORRELATION
VALUE LOWER THAN THRESHOLD
VALUE PRESENT ? — S15

YES →

ADJUST ANGLE OF ANT#1
CORRESPONDING TO LOWEST ANTENNA
CORRELATION, AND SET ANTENNA
CORRELATION VALUE LOWER THAN
THRESHOLD VALUE — S16

END

NO

MODIFIED ANT#2
TO ALL PREDETERMINED ANGLES ?
NO REMAINING ANGLE TO BE
MODIFIED ?
(*1) — S17

NO → MODIFY ANGLE OF
ANT#2 BY 1 STEP — S18

YES

*1:
SINCE RELATION WITH ANT#1 CAN BE ALTERED BY
MODIFYING ANGLE OF ANT#2 FOR EVERY
PREDETERMINED ANGLE, LIKELIHOOD OF OBTAINING
OPTIMUM CONDITION

MOVE ANT#1 AND ANT#2 TO ANGLE EXHIBITING
LOWEST ANTENNA CORRELATION THUS FAR — S19

END

16